# EUROPEAN PATENT SPECIFICATION

(11) **EP 1 733 527 B1**
(45) Date of publication and mention of the grant of the patent: **13.02.2008**
(21) Application number: 03789314.6
(22) Date of filing: 17.12.2003
(51) Int. Cl.: H04L 29/06, H04L 1/00

(54) **TECHNIQUE FOR HANDLING OUTDATED INFORMATION UNITS**
Verfahren für die Behandlung von überholten Informationseinheiten
Technique de gestion d'unités de données désuètes

(43) Date of publication of application: 20.12.2006
(73) Proprietor: TELEFONAKTIEBOLAGET LM ERICSSON (publ), 164 83 Stockholm (SE)
(72) Inventor: BRUSS, Jörg, 52249 Eschweiler (DE)
(74) Representative: Tonscheidt, Andreas
(86) International application number: PCT/EP2003/014411
(87) International publication number: WO 2005/060200

(56) References cited:
- EP-A- 1 398 897
- US-B1- 6 519 223
- US-B1- 6 621 796
- R. STEWART ET AL.: "SCTP Partial Reliability Extension" INTERNET DRAFT, [Online] 26 November 2003 (2003-11-26), pages 1-23, XP002277731 draft-ietf-tsvwg-prsctp-02.txt Retrieved from the Internet: <URL:ftp://ftp.faqs.org/internet-drafts/dr aft-ietf-tsvwg-prsctp-02.txt>

## Description

### TECHNICAL FIELD

The invention relates to communications. More specifically, the invention relates to a technique for handling outdated information units within a retransmission scheme.

### BACKGROUND OF THE INVENTION

Recent advancements in data transfer protocols have increased the reliability of data transport over connectionless packet networks such as Internet Protocol (IP) networks. A relatively new data transfer protocol, Stream Control Transmission Protocol (SCTP), is being increasingly adopted on top of IP in applications where monitoring and detection of loss of sessions is required (see, for example, the SCTP standard draft document RFC2960 prepared by the Signaling Transport working group of The Internet Engineering Task Force). SCTP provides acknowledged error-free non-duplicated transfer of messages. SCTP also incorporates checksums and sequence numbers to detect data corruption, loss of data, and duplication of data. If data is lost or corrupted, SCTP includes a retransmission mechanism that is useful in correcting such events.

Under SCTP, an Upper Layer Protocol (ULP), or the user of SCTP, generates one or more messages. Large messages are fragmented (or segmented) into information units, which in some arrangements are also referred to as chunks (that typically consist of a chunk header and chunk-specific content), to fit within one or more packets, and small chunks derived from small messages may be bundled into one packet. A packet typically includes a common SCTP header, user data encapsulated within SCTP data chunks, and sometimes control chunks.

When generated, each chunk containing user data is associated with a unique Transport Sequence Number (TSN) and is subsequently transmitted. The TSN permits the receiving SCTP end point to acknowledge receipt of a chunk and to detect duplicate deliveries. The TSN is independent of any stream sequence number that may be assigned at the stream level. After transmission and at the receiver (or receiving end), the fragmented messages are assembled and the bundled messages are disassembled.

When a packet is received, an acknowledgment containing the TSNs of received chunks is sent to the sender. SCTP also incorporates a retransmission scheme in which, in some variations, if an acknowledgement for a particular data chunk is not received within a predetermined amount of time, the unacknowledged data chunk is retransmitted to the receiver. The time allocated for an acknowledgement receipt must be coordinated with other timers that may be supervising the user application. Otherwise, a packet may be transmitted after an application has ceased to exist. This or similar circumstances will result in an outdated (or stale) packet being transmitted.

In some implementations, the ULP as the SCTP user, instructs SCTP to purge a ULP message as soon as the lifetime of a packet expires (and thus becomes outdated) before the packet is initially sent (and while it resides in a send queue). However, difficulties arise when a packet for a particular application has already been transmitted and is subject to retransmission. In this case, a data chunk was assembled for that message, the data chunk was sent from the send queue to the receiver, but no acknowledgment has been received. Such a data chunk is subject to the retransmission scheme of SCTP. For a ULP message that is subject to retransmission, SCTP has already allocated a TSN to the related data chunk - which requires that a packet with this TSN must be sent and received regardless of whether the lifetime of the ULP message has expired. Retransmission of packets for applications that have already terminated greatly increases the likelihood of connection loss and unnecessarily consume both processing power and bandwidth.

IETF draft 'SCTP Partial Reliability Extension', available as XP-002277731 discloses an extension to the SCTP protocol that allows an SCTP endpoint to signal to its peer that it should move its cumulative ack point forward.
US-B1-6 621 796 discloses a discard mechanism for Selective Repeat ARQ is achievable, where the discard mechanism exhibits a sender-initiated discard signaling scheme.
US-B1-6 519 223 discloses a system and a method for implementing a semi-reliable retransmission protocol that utilizes both selective repeat Automatic Repeat Request (ARQ), segmentation, and assembly of data packets.
EP-A-1 398 897 discloses transmitting a control message identifying missing data as lost.
However, there is still a need for an efficient technique for handling outdated data chunks in a retransmission scheme.

### SUMMARY OF THE INVENTION

This need is satisfied according the invention by a method for handling outdated distinguishable information units according to claim 1, that includes the steps of identifying an outdated information unit that has previously been transmitted and is subject to retransmission, wherein the outdated information unit has an identification code (which may consist of letters, numbers, and/or symbols), generating a dummy information unit having the identification code of the outdated information unit, and transmitting the dummy information unit instead of the outdated information unit.

The identification code or codes assigned to each information unit may be randomly selected, consecutively assigned, or chosen by any other criteria. Preferably, the identification codes are unique or have not been used within the system for a sufficient amount of time so there will be low likelihood of having two pending information units (whether outdated or otherwise) with the same identification code.

In some embodiments, the outdated information unit is identified by determining whether a message lifetime has expired. An information unit may be classified as being outdated based on a variety of additional or alternative criteria, including user defined system parameters, whether a corresponding acknowledgement of receipt for the particular information unit was received within a certain amount of time, or whether the application using the transmission protocol has ceased or otherwise terminated.

One purpose of modifying the information unit may be to decrease the processing required if the original information units were simply retransmitted without change. Preferably, the packet size of the dummy information unit is less than the size of the outdated information unit, so that its retransmission will require less bandwidth and less processing power than if the original information unit was simply resent. Packet size may be reduced by removing unnecessary data such as at least one of user and control data or other data (that would otherwise consume processing power) that is no longer required. However, it is desirable that the identification code corresponding to the outdated information unit be maintained so that a corresponding acknowledgment receipt may be sent by the receiver after receipt of the dummy information unit.

In some arrangements, each dummy information unit is individually transmitted, however, dummy information units may also be transmitted or bundled with other dummy information units. The bundling may be performed such that a bundle includes only dummy information units but no "regular" information units. In some embodiments, the dummy information units are bundled only when there are dummy information units having consecutive unique identification codes.

Bundling of information units in general (and dummy information units in particular) allows a particular efficient use of packet based services that may underly the retransmission scheme. For example, two or more information units can be bundled to generate data packets that have an optimized size with respect to the maximum packet size allowed by the packet transfer service. Thus, the overall network traffic may be reduced compared with the situation that each information unit is transmitted separately via the network.

With some arrangements, an information unit that has been identified as being outdated is removed from a retransmission queue and is subsequently modified into a dummy information unit. After a dummy information unit is generated, it may be placed within the retransmission queue for retransmission, e.g. at the position of the outdated information unit or at a different position. Dummy information units may be given transmission priority within a queue (e.g., the retransmission queue) such that they are transmitted, and may thus be purged, prior to sending information units containing user data. If an outdated information unit has been identified that has not yet been initially transmitted to a receiver; some variations provide for discarding the outdated information unit instead of transmitting the outdated information unit.

The method of the current invention may also include the steps of receiving the dummy information unit by a receiver (or at a receiving end). Upon receipt of the dummy information unit, the receiver preferably discards or ignores the received dummy information unit. It may additionally send a corresponding acknowledgement receipt to the sender for each received dummy information unit.

At the transmitting and/or receiving end one or more processing features may be deactivated when handling the dummy information unit because dummy information units do not require sophisticated processing tasks e.g. with respect to data or control information included therein. Thus, processing resources are disburdened and processing power consumption is reduced. Furthermore, the deactivation of processing features allows for a quicker processing of dummy information units, in particular on the receiving side.

One embodiment of the invention provides for a method for purging outdated sequenced data chunks transmitted via the Stream Control Transmission Protocol (that includes retransmission capabilities), preferably on top of a packet-based transmission service like the Internet Protocol. This embodiment includes the steps of generating one or more data chunks for each message from a User Layer Protocol, assigning each data chunk with a Transport Sequence Number, generating one or more packets based on the data chunks, transmitting the packets, identifying an outdated message that has previously been transmitted having one or more chunks, modifying each data chunk generated from the outdated message prior to retransmission to generate a dummy data chunk having the Transport Sequence Number of the corresponding data chunk, and transmitting each dummy data chunk. With this arrangement, the dummy data chunks are smaller than the outdated information units and dummy data chunks may be classified within a special traffic class such as TOS / Diffserv class where they receive transmission priority over other packets. This ensures that the dummy data packets are quickly processed and do not hinder the processing of any other packets.

In order to reduce the processing at the receiving end, the receiving STCP instance preferably does not inform the applicable user about the dummy data packet, but rather silently discards it. If the receiving STCP instance does not support discarding packets, the ideal dummy data chunk will have zero user data which will result in the receiving STCP instance ignoring the dummy data chunk (or message).

The invention can be implemented as a hardware solution or as a computer program product comprising program code portions for performing the steps of the invention when the computer program product is run on a computing device. The computer program product may be stored on a computer-readable recording medium like a data carrier. The invention may also be implemented as a system comprising a computer processor and a memory coupled to the processor, where the memory is encoded with one or more programs that may perform the steps of the invention.

The invention may also be implemented via a device that handles outdated distinguishable information units within a retransmission protocol, according to claim 14. Such a device includes an identification unit that identifies whether an information unit subject to retransmission is outdated and the associated identification code for that outdated information unit. A generation unit that is coupled to the identification unit subsequently generates a dummy information unit, e. g. by modifying the outdated information unit prior to retransmission. Preferably, this dummy information unit has a size less than that of the original information unit to allow for less bandwidth congestion and power consumption (and associated disconnection) than if the original information unit was transmitted.

Once the dummy information unit is assembled, a transmission unit coupled to the generation unit transmits the dummy information unit instead of the (unmodified) outdated information unit to a receiver. At the receiver, the dummy information unit might either be discarded or ignored based on the system parameters of the receiver and an acknowledgment receipt will be transmitted back to the sender.

In some arrangements, the generation unit or a unit coupled thereto also includes a send queue wherefrom information units are first transmitted and a retransmit queue from where either information units are retransmitted, or from where dummy information units are transmitted. Rather than having two separate queues, a single transmission queue may be utilized that sends all information units (whether they are dummy information units or otherwise). Within the queue(s), there may be a transmission priority hierarchy that provides certain types of information units as defined by the user with transmission priority over other types of predetermined information units.

### BRIEF DESCRIPTION OF THE DRAWINGS

In the following the invention will be described with reference to exemplary embodiments illustrated in the figures, in which:
- Fig. 1: is a schematic diagram illustrating an arrangement where respective ULPs are users of SCTP transport services over an IP network service;
- Fig. 2: is a process flow diagram according to a first embodiment of the invention;
- Fig. 3: schematically shows a system according to a second embodiment of the invention;
- Fig. 4: is a process flow diagram according to a third embodiment of the invention;
- Fig. 5: is a process flow diagram according to a fourth embodiment of the invention; and
- Fig. 6: is a process flow diagram according to a fifth embodiment of the invention.

### DETAILED DESCRIPTION OF PREFERRED EMBODIMENTS

In the following description, for purposes of explanation and not limitation, specific details are set forth, such as particular protocols, signal formats, etc. in order to provide a thorough understanding of the present invention. It will be apparent to one skilled in the art that the present invention may be practiced in other embodiments that depart from these specific details. In particular, while the different embodiments are described herein below incorporated into or used in conjunction with a system, utilizing SCTP an top of IP, the present invention is not limited to such an implementation, but for example can be utilized with any sequenced data retransmission protocol (or any other data communications system where stale, outdated, or expired messages may be retransmitted).

Moreover, those skilled in the art will appreciate that the functions explained herein below may be implemented using individual hardware circuitry, using software functioning in conjunction with a programmed microprocessor or general purpose computer, using an application specific integrated circuit (ASIC), and/or using one or more digital signal processors (DSPs). It will also be appreciated that while the current invention is primarily described as a method, it may also be embodied in a system comprising a computer processor and a memory coupled to the processor, where the memory is encoded with one or more programs that may perform the methods disclosed herein.

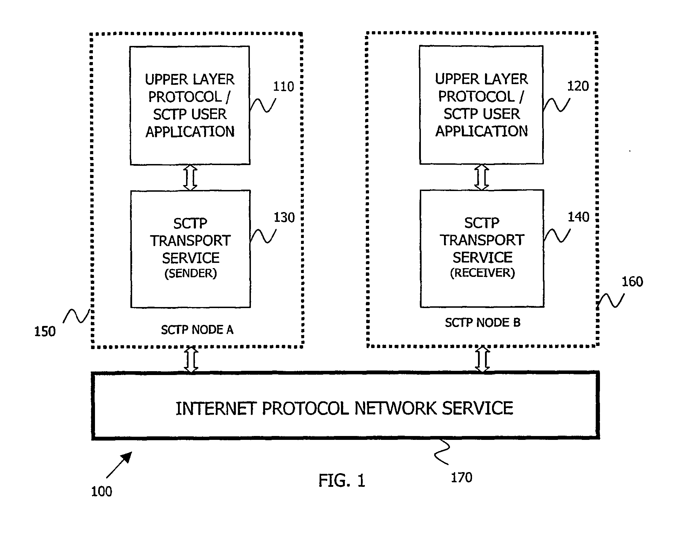

FIG. 1 is a schematic for several embodiments of the current invention where respective ULPs, or SCTP User Applications 110, 120, utilize respective SCTP Transport Services 130, 140 overlaid on an IP Network Transport service 170 with each ULP forming part of at least one node 150, 160 (where each node may be reached under one or more IP addresses) corresponding thereto. To establish an association between the two nodes, 150, 160, both SCTP Transport Services exchange a series of messages or handshakes. For purposes of this disclosure, the SCTP Transport Service 130 (or any other transport service) and the corresponding node 150 that generates and purges the outdated messages belong to a sending end, and the corresponding SCTP Transport Service 140 (or any other transport service) and node 10 that may receive the outdated message belong to a receiver or receiving end.

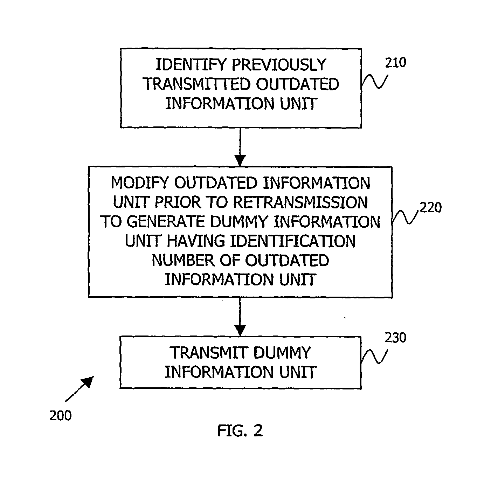

In FIG. 2, a process flow diagram 200 for a first embodiment of a technique for handling outdated information units is shown. In this arrangement, information units (also referred to as data sequences) that have previously been determined to be outdated are identified by their respective identification codes 210. Once the information units have been identified, they are modified prior to retransmission to create a dummy information unit 220. The dummy information unit is then transmitted 230. Further detail about this process and variations thereof will be described below.

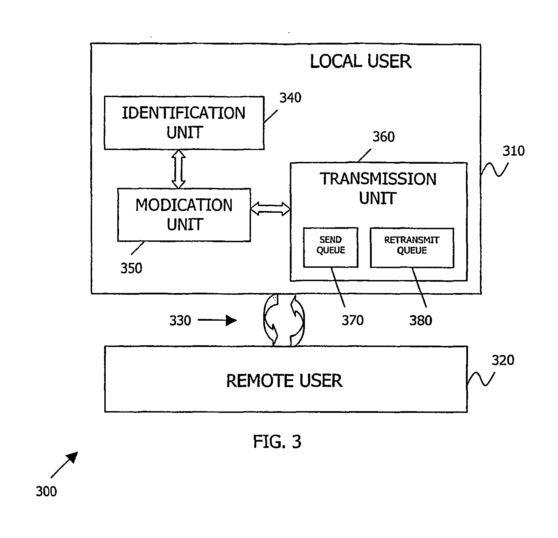

FIG. 3 illustrates a system 300 for implementing various methods according to the current invention, including those illustrated in FIGs. 2 and 4 to 6. The system includes a local user 310 and a remote user 320 that are in communication with each other via a communication pathway 330. An identification unit 340 identifies outdated information units (that have not yet been retransmitted to the remote user 320) through the unique identification code(s) of each information unit. The identification unit 340 is coupled to a modification unit 350 which generates dummy information units by modifying those information units that have been identified as outdated by the identification unit 340.

Each dummy information unit includes the identification code for the respective outdated information unit but excludes any user or control information contained within the outdated information unit (e.g., the dummy information unit is reduced to a size of 16 bytes or less). The shorter a dummy information unit, the less processing power will be consumed and the less likely the packet containing the chunk will be dropped after transmission, and less processing is required for intermediate nodes. Once the dummy information unit has been generated, the modification unit 350 sends the dummy information unit to a transmission unit 360 that is coupled to the modification unit 350. The transmission unit 360 then transmits the dummy information unit over the communication pathway 330 to the remote user 320.

In some arrangements, the dummy information units are given transmission priority over other non-dummy information units. In this and other arrangements, the modification unit comprises a send queue 370 wherefrom information units are first transmitted and a retransmit queue 380 from where still valid or outdated information units are retransmitted, or from where dummy information units are transmitted. In other variations, a single send queue is utilized for both the initial transmission of information units and subsequent retransmissions when necessary.

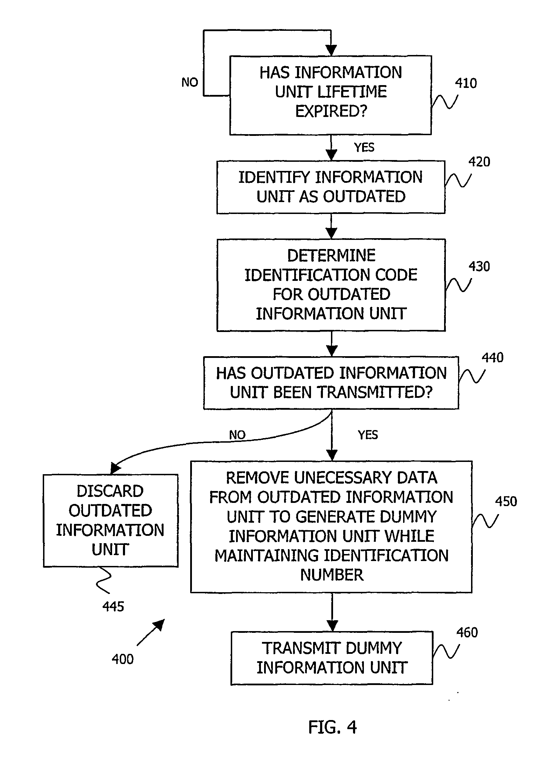

In FIG. 4, a third embodiment of the invention is shown in a process flow diagram 400. The illustrated method commences with a determination whether a lifetime for a particular information unit has expired 410 prior to receiving an acknowledgement receipt for that particular information unit. The lifetime calculation may be based on a variety of factors such as a simple timing function, a timer that is coordinated with other timers for a particular application, or other user defined criteria. If a information unit lifetime has not expired, then this step continues until at least one outdated information unit has been identified. If the information unit lifetime has expired, then that information unit is identified as outdated 420.

The next step is to determine the unique identification code for the outdated information unit 430 so that it may subsequently be determined whether a packet containing the outdated information unit has been transmitted 440. If the outdated information unit has not been transmitted (and does not reside in a retransmission queue) then it is simply discarded or removed from the applicable send queue 445. However, if the outdated information unit has been transmitted, then the next step is to convert the outdated information unit into a dummy information unit 450. The dummy information unit will maintain the same identification code as the outdated information unit and its size will preferably be minimized to the greatest extent possible by removing unnecessary data such as user and control data and (which may be for an application or process that has expired or otherwise terminated). Once the dummy information unit has been generated, is it then transmitted 460 to a receiving end.

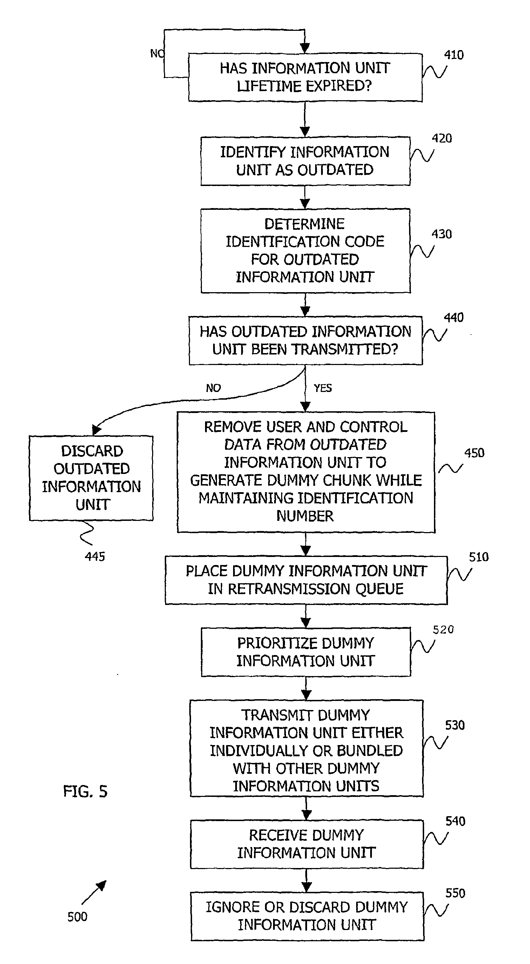

FIG. 5 illustrates a process flow diagram 500 of a fourth embodiment according to the current invention that contains common steps with the embodiment of FIG. 4 (and which utilizes the same reference numerals). After the dummy information unit is generated 450, the dummy information unit is then placed within a retransmission queue 510. In this arrangement, the user application prioritizes each dummy information unit 520 so that it is transmitted prior to other information units that have a lower priority or that have not been granted priority, such as information units containing user data. In an SCTP setting, the dummy information unit may be assigned a special traffic class, such as TOS / Diffserv class, so that they are given high priority for transmission (resulting in rapid processing without hindering other information units).

In addition, during transmission, and depending on the size of the dummy information units, if there are multiple dummy information units within the retransmission queue, then the dummy information units may be bundled into a single packet and then transmitted 530, provided that the packet does not exceed any applicable size restrictions such as a maximum transfer unit limit. In some embodiments, only dummy information units having sequential identification codes may be bundled (or there may be other bundling requirements depending on the utilized protocol). Preferably, the dummy information units are not bundled with any other non-dummy information units as the increase in packet size increases the likelihood of connection loss (while also decreasing bandwidth). After the dummy information units are received 540 by a receiver or receiving end, the receiving end either ignores or simply discards the dummy information units resulting in the outdated information units being purged.

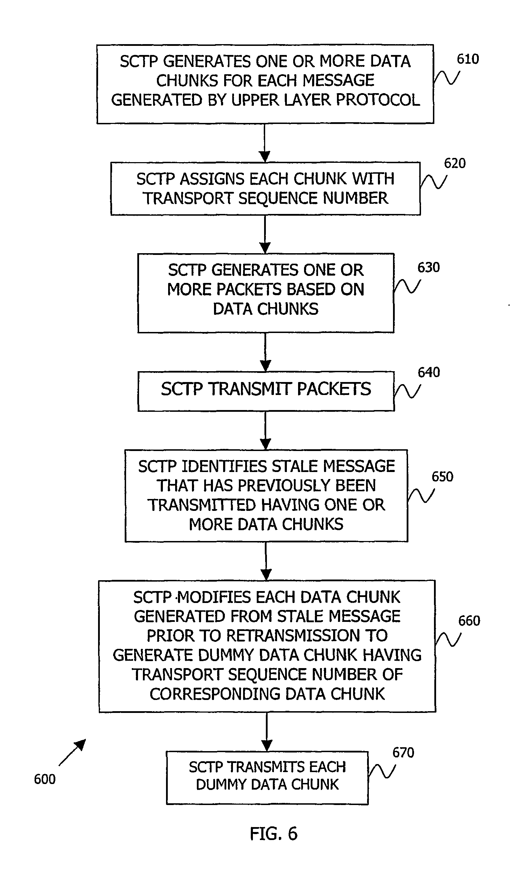

FIG. 6 illustrates a fifth embodiment 600 that utilizes an environment such as shown in FIG. 1 where a ULP, or Upper Layer Protocol, is a user for an SCTP over an IP network. In this embodiment, SCTP generates one or more information units in the form of data chunks for each message generated by the ULP 610. Each of these data chunks is assigned its own identification code or TSN 620. After each data chunk is assigned a TSN, they are then assembled into a packet 630. Depending on system limits for packet size as provided by a system Path Maximum Transfer Unit or PMTU, each packet might only contain a single data chunk for a fragmented message, a single data chunk corresponding to a single message, or multiple data chunks corresponding to multiple messages.

Once the packet has been generated, the packets are then transmitted 640 to the receiver. The process then identifies whether there are any outdated messages (which each have one or more corresponding data chunks) based on criteria such as application timers, user defined controls, etc., and if so, whether the outdated message has been previously transmitted 650 and resides in a send queue. If an outdated message has not been transmitted and remains in a send queue, it will be immediately be discarded or it will be discarded prior to transmission. If the outdated message has already been transmitted and is in a retransmission queue, then each data chunk corresponding to the message will be modified into a dummy data chunk, whereby information other than the TSN is removed (such as control and user data) 660. Once generated, the dummy data is then transmitted 670.

At the receiver, the SCTP will either silently discard the packet and not inform the user, or the receiver may treat the dummy data chunk as any other received data chunk. The receiver SCTP will notify the applicable ULP which will in turn ignore the dummy data chunk.

One will appreciate that there are many advantages associated with the reduction or minimization of the number and size of stale or outdated information units. The benefits include minimizing wasted bandwidth, reducing the likelihood of connection loss, and lowering the amount of processing power required by the sequenced data transfer protocol (such as SCTP).

While the present invention has been described with respect to particular embodiments, those skilled in the art will recognize that the present invention is not limited to the specific embodiments described and illustrated herein. Therefore, while the present invention has been described in relation to its preferred embodiments, it is to be understood that this disclosure is only illustrative. Accordingly, it is intended that the invention be limited only by the scope of the claims appended hereto.

## Claims

1. A method for handling outdated distinguishable information units within a retransmission scheme, comprising the steps of:
identifying an outdated information unit that has previously been transmitted and that is subject to retransmission (420), wherein the outdated information unit has an identification code;
generating a dummy information unit having the identification code of the outdated information unit (450); and
transmitting the dummy information unit instead of the outdated information unit (530) **characterised in that** the outdated information unit is identified by determining whether a message lifetime has expired (410), the outdated information unit is identified as a result of there being no corresponding acknowledgement of receipt, and/ or the outdated information unit is identified as a result of an application using a transmission protocol has ceased or otherwise terminated.

2. The method of any of the preceding claims, wherein the packet size of the dummy information unit is less than the size of the outdated information unit.

3. The method of any of the preceding claims, wherein the dummy information unit is generated by modifying the outdated information unit and in particular by removing user or control data from the outdated information unit (450).

4. The method of any of claims 1 to 3, wherein the dummy information unit is bundled with other dummy information units (530).

5. The method of claim 4, wherein the modified dummy information unit is bundled with other dummy information units having consecutive unique identification codes.

6. The method of any of the preceding claims, further comprising the step of removing the identified information unit from a retransmission queue.

7. The method of any of the preceding claims, wherein the dummy information unit is granted transmission priority within a retransmission queue.

8. The method of any of the preceding claims, further comprising the steps of:
receiving the dummy information unit (540);
acknowledging receipt of the dummy information unit; and
discarding or ignoring the received dummy information unit (550).

9. The method of any of the preceding claims, further comprising the step of deactivating one or more processing features on a transmitting and/ or a sending side when handling the dummy information unit.

10. The method of any of the preceding claims, further comprising the initial steps of:
identifying an outdated information unit that has not previously been transmitted (420); and
discarding the outdated information unit instead of transmitting the outdated information unit (445).

11. The method of any of the preceding claims, wherein the scheme underlying the retransmission of information units is the Stream Control Transmission Protocol; and/or
the information units are data chunks each having a distinguishable Transport Sequence Number (620); and/or
the information units are generated on the basis of a message received from an Upper Layer Protocol (110).

12. A computer program product, comprising:
a computer usable medium having computer readable code embodied therein for handling outdated distinguishable information units within a retransmission scheme, the computer program product comprising:
computer readable program code portions configured to identify an outdated information unit that has previously been transmitted and is subject to retransmission (420), the outdated information unit having an identification code, wherein the computer readable program code portions are configured to identify the outdated information unit by determining whether a message lifetime has expired (410), as a result of there being no corresponding acknowledgement of receipt, and/ or as a result of an application using a transmission protocol has ceased or otherwise terminated,
computer readable program code portions configured to generate a dummy information unit having the identification code of the outdated information unit (450); and
computer readable program code portions configured to transmit the dummy information unit instead of the outdated information unit (530).

13. The computer program product of claim 12 stored on a computer readable recording medium.

14. A device (310) for handling outdated distinguishable information units within a retransmission scheme, comprising:
an identification unit (340) to identify an outdated information unit that has previously been transmitted and that is subject to retransmission, the outdated information unit having an identification code;
a generation unit (350) to generate a dummy information unit having the identification code of the outdated information unit; and
a transmission unit (360) to transmit the dummy information unit instead of the outdated information unit, **characterised in that**
the identification unit (340) is adapted to identify the outdated information unit by determining whether a message lifetime has expired, as a result of there being no corresponding acknowledgement of receipt, and/ or as a result of an application using a transmission protocol has ceased or otherwise terminated.

15. A device (310) comprising a computer processor and a memory coupled to the processor, where the memory is encoded with one or more programs that may perform a method for handling outdated distinguishable information units within a retransmission scheme, comprising the steps of:
identifying an outdated information unit that has previously been transmitted and is subject to retransmission (420), the outdated information unit having an identification code;
generating a dummy information unit having the identification code of the outdated information unit (450); and
transmitting the dummy information unit instead of the outdated information unit (530), **characterised by**:
identifying the outdated information unit by determining whether a message lifetime has expired (410), as a result of there being no corresponding acknowledgement of receipt, and/ or as a result of an application using a transmission protocol has ceased or otherwise terminated.

## Patentansprüche

1. Verfahren zur Verarbeitung von überholten unterscheidbaren Informationseinheiten innerhalb eines Wiederholungssendungsschemas, umfassend die folgenden Schritte:
Identifizieren einer überholten Informationseinheit, die vorher gesendet wurde und die einer Wiederholungssendung unterzogen wird (420), wobei die überholte Informationseinheit einen Identifikationscode aufweist;
Erzeugen einer Dummyinformationseinheit mit dem Identifikationscode der überholten Informationseinheit (450); und
Senden der Dummyinformationseinheit anstelle der überholten Informationseinheit (530), **dadurch gekennzeichnet, dass** die überholte Informationseinheit durch Feststellen identifiziert wird, ob eine Nachrichtenlebensdauer abgelaufen ist (410), die überholte Informationseinheit infolgedessen identifiziert wird, dass es keine entsprechende Empfangsbestätigung gibt, und/oder die überholte Informationseinheit infolgedessen identifiziert wird, dass eine Anwendung, die ein Übertragungsprotokoll verwendet, aufgehört hat oder anderweitig beendet wurde.

2. Verfahren nach einem der vorhergehenden Ansprüche, wobei die Paketgröße der Dummyinformationseinheit kleiner als die Größe der überholten Informationseinheit ist.

3. Verfahren nach einem der vorhergehenden Ansprüche, wobei die Dummyinformationseinheit durch Modifizieren der überholten Informationseinheit und insbesondere durch Entfernen von Benutzer- oder Steuerdaten aus der überholten Informationseinheit erzeugt wird (450).

4. Verfahren nach Anspruch 1 bis 3, wobei die Dummyinformationseinheit mit anderen Dummyinformationseinheiten gebündelt wird (530).

5. Verfahren nach Anspruch 4, wobei die modifizierte Dummyinformationseinheit mit anderen Dummyinformationseinheiten mit fortlaufenden eindeutigen Identifikationscodes gebündelt wird.

6. Verfahren nach einem der vorhergehenden Ansprüche, ferner umfassend den Schritt des Entfernens der identifizierten Informationseinheit aus einer Wiederholungssendungswarteschlange.

7. Verfahren nach einem der vorhergehenden Ansprüche, wobei der Dummyinformationseinheit eine Sendepriorität innerhalb der Wiederholungssendungswarteschlange erteilt wird.

8. Verfahren nach einem der vorhergehenden Ansprüche, ferner umfassend die folgenden Schritte:
Empfangen der Dummyinformationseinheit (540);
Bestätigen des Empfangs der Dummyinformationseinheit; und
Verwerfen oder Ignorieren der empfangenen Dummyinformationseinheit (550).

9. Verfahren nach einem der vorhergehenden Ansprüche, ferner umfassend den Schritt des Deaktivierens eines oder mehrerer Verarbeitungsmerkmale auf einer übertragenden und/oder sendenden Seite, wenn die Dummyinformationseinheit verarbeitet wird.

10. Verfahren nach einem der vorhergehenden Ansprüche, ferner umfassend die folgenden einleitenden Schritte:
Identifizieren einer überholten Informationseinheit, die vorher nicht gesendet wurde (420); und
Verwerfen der überholten Informationseinheit, statt die überholte Informationseinheit zu senden (445).

11. Verfahren nach einem der vorhergehenden Ansprüche, wobei das Schema, das der Wiederholungssendung von Informationseinheiten zugrunde liegt, das Stromsteuerungsübertragungsprotokoll ist; und/oder
die Informationseinheiten Daten-Chunks sind, welche jeweils eine unterscheidbare Transportreihenfolgenummer aufweisen (620); und/oder
die Informationseinheiten auf der Basis einer Nachricht erzeugt werden, die von einem Protokoll der höheren Schichten empfangen wird (110).

12. Computerprogrammprodukt, umfassend:
ein computerlesbares Medium mit einem computerlesbaren Code, der darin enthalten ist, zum Verarbeiten von überholten unterscheidbaren Informationseinheiten innerhalb eines Wiederholungssendungsschemas, wobei das Computerprogrammprodukt umfasst:
computerlesbare Programmcodeabschnitte, die so konfiguriert sind, dass die eine überholte Informationseinheit identifizieren, die vorher gesendet wurde und einer Wiederholungssendung unterzogen wird (420), die überholte Informationseinheit einen Identifikationscode aufweist, wobei die computerlesbaren Programmcodeabschnitte so konfiguriert sind, dass sie die überholte Informationseinheit durch Feststellen identifizieren, ob eine Nachrichtenlebensdauer abgelaufen ist (410), infolgedessen, dass es keine entsprechende Empfangsbestätigung gibt, und/oder infolgedessen, dass eine Anwendung, die ein Übertragungsprotokoll verwendet, aufgehört hat oder anderweitig beendet wurde,
computerlesbare Programmcodeabschnitte, die so konfiguriert sind, dass sie eine Dummyinformationseinheit mit dem Identifikationscode der überholten Informationseinheit erzeugen (450); und
computerlesbare Programmcodeabschnitte, die so konfiguriert sind, dass die sie Dummyinformationseinheit anstelle der überholten Informationseinheit senden (530).

13. Computerprogrammprodukt nach Anspruch 12, gespeichert auf einem computerlesbaren Aufzeichnungsmedium.

14. Vorrichtung (310) zum Verarbeiten von überholten unterscheidbaren Informationseinheiten innerhalb eines Wiederholungssendungsschemas, umfassend:
eine Identifikationseinheit (340) zum Identifizieren einer überholten Informationseinheit, die vorher gesendet wurde und die einer Wiederholungssendung unterzogen wird, wobei die überholte Informationseinheit einen Identifikationscode aufweist;
eine Erzeugungseinheit (350) zum Erzeugen einer Dummyinformationseinheit mit dem Identifikationscode der überholten Informationseinheit; und
eine Sendeeinheit (360) zum Senden der Dummyinformationseinheit anstelle der überholten Informationseinheit, **dadurch gekennzeichnet, dass**
die Identifikationseinheit (340) so ausgelegt ist, dass sie die überholte Informationseinheit durch Feststellen identifiziert, ob eine Nachrichtenlebensdauer abgelaufen ist, infolgedessen, dass es keine entsprechende Empfangsbestätigung gibt, und/oder infolgedessen, dass eine Anwendung, die ein Übertragungsprotokoll verwendet, aufgehört hat oder anderweitig beendet wurde.

15. Vorrichtung (310), umfassend einen Computerprozessor und einen Speicher, der mit dem Prozessor gekoppelt ist, wobei der Speicher mit einem oder mehr Programmen codiert ist, die ein Verfahren zur Verarbeitung von überholten unterscheidbaren Informationseinheiten innerhalb eines Wiederholungssendungsschemas durchführen können, umfassend die folgenden Schritte:
Identifizieren einer überholten Informationseinheit, die vorher gesendet wurde und einer Wiederholungssendung unterzogen wird (420), wobei die überholte Informationseinheit einen Identifikationscode aufweist;
Erzeugen einer Dummyinformationseinheit mit dem Identifikationscode der überholten Informationseinheit (450); und
Senden der Dummyinformationseinheit anstelle der überholten Informationseinheit (530), **gekennzeichnet durch**:
Identifizieren der überholten Informationseinheit durch Feststellen, ob eine Nachrichtenlebensdauer abgelaufen ist (410), infolgedessen, dass es keine entsprechende Empfangsbestätigung gibt und/oder infolgedessen, dass eine Anwendung, die ein Übertragungsprotokoll verwendet, aufgehört hat oder anderweitig beendet wurde.

## Revendications

1. Procédé pour gérer des unités d'information périmées distinguables à l'intérieur d'un système de retransmission, comprenant les étapes consistant à:
identifier une unité d'information périmée qui a été précédemment transmise et qui est sujette à une retransmission (420), moyennant quoi l'unité d'information périmée a un code d'identification ;
générer une unité d'information fictive ayant le code d'identification de l'unité d'information périmée (450) ; et
transmettre l'unité d'information fictive au lieu de l'unité d'information périmée (530), **caractérisé en ce que** l'unité d'information périmée est identifiée en déterminant si une durée de vie de message est arrivée à expiration (410), l'unité d'information périmée est identifiée en conséquence de ce qu'il n'y a pas d'accusé de réception correspondant et/ou l'unité d'information périmée est identifiée en conséquence de ce qu'une application utilisant un protocole de transmission s'est arrêtée ou sinon a pris fin.

2. Procédé selon quelconque des revendications précédentes, dans lequel la taille de paquet de l'unité d'information fictive est inférieure à la taille de l'unité d'information périmée.

3. Procédé selon une quelconque des revendications précédentes, dans lequel l'unité d'information fictive est générée en modifiant l'unité d'information périmée et, en particulier, en supprimant des données d'utilisateur ou de commande de l'unité d'information périmée (450).

4. Procédé selon une des revendications 1 à 3, dans lequel l'unité d'information fictive est groupée avec d'autres unités d'information fictives (530).

5. Procédé selon la revendication 4, dans lequel l'unité d'information fictive modifiée est groupée avec d'autres unités d'information fictives ayant des codes d'identification uniques consécutifs.

6. Procédé selon une quelconque des revendications précédentes, comprenant en outre l'étape consistant à supprimer l'unité d'information identifiée d'une file d'attente de retransmission.

7. Procédé selon une quelconque des revendications précédentes, dans lequel l'unité d'information fictive se voit accorder une priorité de transmission à l'intérieur d'une file d'attente de retransmission.

8. Procédé selon une quelconque des revendications précédentes, comprenant en outre les étapes consistant à:
recevoir l'unité d'information fictive (540);
accuser réception de l'unité d'information fictive; et
rejeter ou ignorer l'unité d'information fictive reçue (550).

9. Procédé selon une quelconque des revendications précédentes, comprenant en outre l'étape consistant à désactiver une ou plusieurs fonctionnalités de traitement sur une extrémité de transmission et/ou d'émission lors de la gestion de l'unité d'information fictive.

10. Procédé selon une quelconque des revendications précédentes, comprenant en outre les étapes initiales consistant à:
identifier une unité d'information périmée qui n' a pas été précédemment transmise (420) ; et
rejeter l'unité d'information périmée au lieu de transmettre l'unité d'information périmée (445).

11. Procédé selon une quelconque des revendications précédentes, dans lequel le système sous-jacent à la retransmission des unités d'information est le protocole de transmission de commande de flux (Stream Control Transmission Protocol) ; et/ou
les unités d'information sont des segments de données ayant chacun un numéro de séquence de transport distinguable (620) ; et/ou
les unités d'information sont générées sur la base d'un message reçu depuis un protocole de couche supérieure (110).

12. Produit de programme informatique, comprenant :
un support utilisable par un ordinateur contenant du code lisible par un ordinateur afin de gérer des unités d'information périmées distinguables à l'intérieur d'un système de retransmission, le produit de programme informatique comprenant:
des portions de code de programme lisible par un ordinateur configurées afin d'identifier une unité d'information périmée qui a été précédemment transmise et est sujette à une retransmission (420), l'unité d'information périmée ayant un code d'identification, moyennant quoi les portions de code de programme lisibles par un ordinateur sont configurées afin d'identifier l'unité d'information périmée en déterminant si une durée de vis d'un message est arrivée à expiration (410) et, en conséquence de ce qu'il n'y a pas d'accusé de réception correspondant, et/ou en conséquence de ce qu'une application utilisant un protocole de transmission s'est arrêtée ou sinon a pris fin,
des portions de code de programme lisibles par un ordinateur configurées afin de générer une unité d'information fictive ayant le code d'identification de l'unité d'information périmée (450) ; et
des portions de code de programme informatique lisibles par un ordinateur configurées afin de transmettre l'unité d'information fictive au lieu de l'unité d'information périmée (530).

13. Produit de programme informatique selon la revendication 12 mémorisé sur un support d'enregistrement lisible par un ordinateur.

14. Dispositif (310) pour gérer des unités d'information périmées distinguables à l'intérieur d'un système de retransmission, comprenant :
une unité d'identification (340) pour identifier une unité d'information périmée qui a été précédemment transmise et qui est sujette à une retransmission, l'unité d'information périmée ayant un code d'identification ;
une unité de génération (350) pour générer une unité d'information fictive ayant le code d'identification de l'unité d'information périmée ; et
une unité de transmission (360) pour transmettre l'unité d'information fictive au lieu de l'unité d'information périmée, **caractérisé en ce que**
l'unité d'identification (340) est adaptée pour identifier l'unité d'information périmée en déterminant si une durée de vie de message est arrivée à expiration, en conséquence de ce qu'il n' y a pas d'accusé de réception correspondant et/ou en conséquence de ce que une application utilisant un protocole de transmission s'est arrêtée ou sinon a pris fin.

15. Dispositif (310) comprenant un processeur informatique et une mémoire couplée au processeur, où la mémoire est codée avec un ou plusieurs programmes qui peuvent mettre en oeuvre un procédé pour gérer des unités d'information périmées distinguables à l'intérieur d'un système de retransmission, comprenant les étapes consistant à :
identifier une unité d'information périmée qui a été précédemment transmise et est sujette à une retransmission (420), l'unité d'information périmée ayant un code d'identification ;
générer une unité d'information fictive ayant le code d'identification de l'unité d'information périmée (450) ; et
transmettre l'unité d'information fictive au lieu de l'unité d'information périmée (530), **caractérisé par**:
l'identification de l'unité d'information périmée en déterminant si une durée de vie de message est arrivée à expiration (410), en conséquence de qu'il n'y a pas d'accusé de réception correspondant et/ou en conséquence de ce que une application utilisant un protocole de transmission s'est arrêtée ou sinon a pris fin.
